# EUROPEAN PATENT APPLICATION

(11) **EP 3 435 664 A1**
(43) Date of publication of application: **30.01.2019**
(21) Application number: 18182646.2
(22) Date of filing: 10.07.2018
(51) Int. Cl.: H04N 7/14, H04N 7/15

(54) **TELEPRESENCE ROBOT**

(30) Priority: 28.07.2017 US 201715662880
(71) Applicant: Engineering Services Inc., Markham, Ontario L3R 9T8 (CA)
(72) Inventor: WANG, ChinJohn, Mississauga, Ontario L5G 2J6 (CA); HUANG, Qing, Markham, Ontario L3R 3G1 (CA)
(74) Representative: Lecomte & Partners

(57) **Abstract**

A telepresence robot (10) for use in association with a remote computing device (200) includes a base (18), a body (16), a neck (14), a head (12) and a tilt mechanism (30). The base has a drive system in communication with the remote computing device. The body is operably attached to the base. The neck is operably attached to the body. The head is operably attached to the neck. The head has a screen (22) and the screen is in communication with the remote computing device. The tilt mechanism connects the head to the neck. The tilt mechanism includes a chain and sprocket assembly (36, 38) whereby the head tilts at least 10 degrees forwardly from a generally upright position and at least 10 degrees backwardly form the generally upright position.

## Description

### FIELD OF THE DISCLOSURE

This disclosure relates to personal robots and in particular telepresence robots that are able to provide human to human video and audio conferencing otherwise known as telepresence.

### BACKGROUND

The use of video conferencing has in recent years become an important tool for many businesses. However, there are many limitations to a typical video conference set up. Specifically, the person joining the conference by way of video conference typically has little or no control over who they are looking at. The limitations of video conferencing and other issues related to working with a team from a remote location have generated a new type of robot often referred to as a telepresence personal robot. A telepresence robot typically combines the freedom of mobility with video conferencing. This combination provides an improved experience over video conferencing and that improves people's connection with clients, employees and teammates.

There are some telepresence robots available however they have several limitations that limit their functionality. Of those telepresence robots currently on the market, many do not have the ability to rotate or tilt their head (pan/tilt). This is a severe design limitation as the ability to look around is an important feature for the user to fully participate in the meeting. Furthermore, of those designs which do incorporate the flexibility of pan/tilt, none meet some specific requirements that would allow for full participation of the user during the video teleconferencing operation. More specifically, these requirements are threefold. First, the video image should be stable, even during travel. Second, there should be a safety system in place which will limit the damage done to internal parts should a user attempt to manually move the head. Finally, the system should have longevity, that is over time the system does not degrade to the point where it no longer meets the first two requirements.

Some telepresence robots are equipped with the head pan-tilt motion using coreless motors to directly drive the shaft of the rotating axes. However, there are some limitations. An example is in iRobot Company's product, called RP-Vita™. The display monitor hangs down from a flat "neck" - a hollow supporting structure of the monitor. The two motion axes are separated: the pan components are located in the "shoulder" area - the main body of the robot, and the tilt components are directly attached to one end of the "neck" through a joint between the neck and the display. Even though RP-Vita uses a coreless motor which is self-supporting and has high power-to-volume characteristics, the single direct connection between display and motor are too weak to hold the display stably in the tilt direction. Therefore, the inherent limitation in the use of such pan-tilt motion is that the tilt direction mechanical structure is too weak to hold the display of the robot in limited positions. Because the range of motion of the RP-Vita head is limited, it can only be used in specific situations.

Accordingly, it would be advantageous to provide a telepresence robot that has a head with a wide range of motion. Alternatively, it would be advantageous to provide a telepresence robot that provides a user interface that provide the user with a wide range of options in regard to operating the telepresence robot.

### SUMMARY

A telepresence robot for use in association with a remote computing device includes a base, a body, a neck, a head and a tilt mechanism. The base has a drive system in communication with the remote computing device. The body is operably attached to the base. The neck is operably attached to the body. The head is operably attached to the neck. The head has a screen and the screen is in communication with the remote computing device. The tilt mechanism connects the head to the neck. The tilt mechanism includes a chain and sprocket assembly whereby the head tilts at least 10 degrees forwardly from a generally upright position and at least 10 degrees backwardly form the generally upright position.

Optionally, the tilt mechanism may tilt the head further to at least 40 degrees forwardly from the generally upright position and at least 90 degrees backwardly from the generally upright position.

The chain and sprocket assembly of the tilt mechanism may include a main shaft assembly and a spring operably connected to the main shaft assembly whereby the spring counterbalances the head.

The tilt mechanism further may include a clutch operably attached to the chain and sprocket assembly and the main shaft assembly whereby responsive to a force on the head over a predetermined value the clutch operably disengages the chain and sprocket assembly from the main shaft assembly.

The telepresence robot may further include a pan assembly operably connected to the head. The pan assembly may rotate the head from -160 degrees to +160 degrees relative to a neutral position.

The telepresence robot may include a front head camera.
The telepresence robot may include a navigation camera. The navigation camera may be a fish eye camera pointing generally forwardly.

The telepresence robot may include a back-head camera.

The remote computing device may be a computer having an image user interface. The image user interface may display a plurality of images. The plurality of images may include images from images the front head camera, the back-head camera and the navigation camera. The plurality of images may include an image from a camera operably attached to the remote computing device. One of the plurality of images may be a larger image. The larger image may be swapped between the images from the front head camera, the back-head camera, the navigation camera and the remote computing device camera. The image user interface may include a mobile control interface. The image user interface may include a pan and tilt control interface. The image user interface may include a single image from the front head camera. The mobile control interface may be controlled by clicking on predetermined portions on the mobile control interface.

The remote computing device may include a keyboard having arrow keys and wherein the mobile control interface may be controlled by using the arrow keys.

The pan and tilt may be controlled by clicking on predetermined portions of the pan and tilt control interface images.

The telepresence robot may be operably connectable to a docking station.

The telepresence robot may include rechargeable batteries and when the telepresence robot is operably connected to the docking station the rechargeable batteries may be recharged.

Further features will be described or will become apparent in the course of the following detailed description.

### BRIEF DESCRIPTION OF THE DRAWINGS

The embodiments will now be described by way of example only, with reference to the accompanying drawings, in which:
Fig. 1 is a perspective view of an embodiment the telepresence robot described herein;
Fig. 2 is an enlarged front view of the head portion of the telepresence robot of figure 1;
Fig. 3 is an enlarged back view of the head portion of the telepresence robot of figure 2;
Fig. 4 is a side view of the head portion of figure 2 showing the head portion titled forward;
Fig. 5 is a side view of the head portion of figures 2 and 3 and showing the head portion titled backward;
Fig. 6 is perspective view of a head tilting assembly for use in association with the head portion of figures 2 to 5;
Fig. 7 is a blown apart perspective view of the head tilting assembly of figure 6;
Fig. 8 is a perspective view of a main shaft assembly for use in the head tilting assembly of figures 6 and 7;
Fig. 9 is a side view of the main shaft assembly of figure 8;
Fig. 10 is a blown apart perspective view of the main shaft assembly of figures 7 and 8;
Fig. 11 is an enlarged back perspective view of a portion of the telepresence personal robot of figure 1 showing head tilting assembly with a portion of the head portion;
Fig. 12 is an enlarged back perspective view similar to that shown in figure 11 but without the head portion;
Fig. 13 is an enlarged perspective view of an embodiment of the pan assembly;
Fig. 14 is a side view of the pan assembly of figure 13;

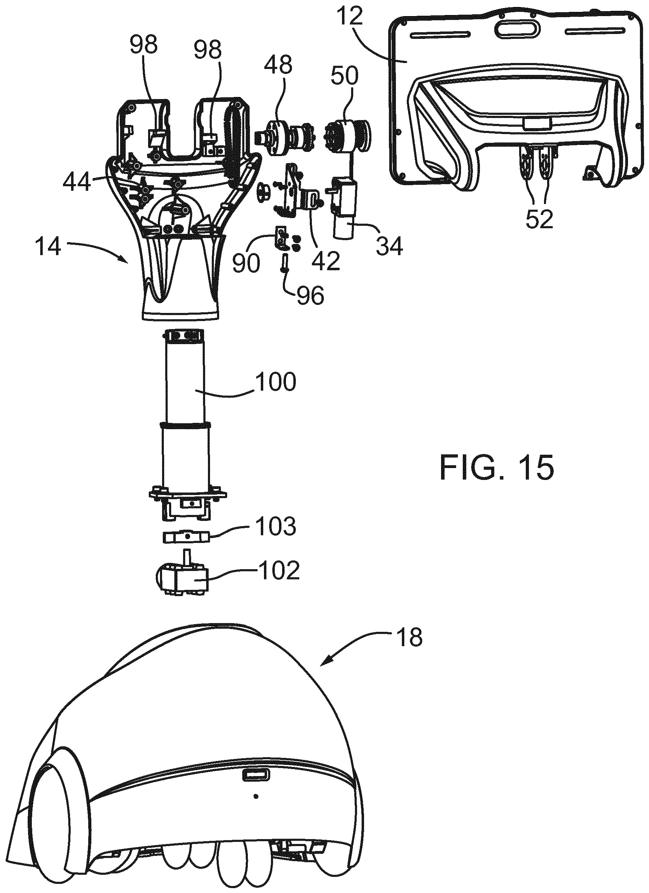

Fig. 15 is a blown apart perspective view of the telepresence robot of figure 1;
Fig. 16 is a front view of the base of the telepresence robot of figure 1;
Fig. 17 is a back view of the base shown in figure 16;
Fig. 18 is a bottom view of the base shown in figures 16 and 17;
Fig. 19 is a perspective view of the base body of the base shown in figures 16 to 18 with and optional infrared receiver;
Fig. 20 is a blown apart view of the drive system of the base of figures 16 to 19;
Fig. 21 is a perspective view of the docking station for the telepresence robot shown in figure 1 and as seen from one side;
Fig. 22 is a perspective view of the docking station shown in figure 21 but as seen from the other side
Fig. 23 is a blown apart perspective view of the docking station of figures 21 and 22;
Fig. 24 is a diagrammatic view of the remote operator user interface;
Fig. 25 is a representative view of the remote operator user interface showing a sample configuration of the views from different cameras;
Fig. 26 is an alternate representative view of the remote operator user interface similar to that shown in figure 25 but showing an alternate sample configuration of the views from the different cameras;
Fig. 27 is a representative view of the image on the head screen;
Fig. 28 is an enlarged view of the driving control interface of the telepresence robot of figure 1;
Fig. 29 is a schematic representation of the connection between the telepresence robot and the computing device of figure 1;
Fig. 30 is a schematic representation of the control and processing hardware of the telepresence robot of figure 1; and
Fig. 31 is a schematic representation of the processor or the computing device of figure 1.

### DETAILED DESCRIPTION

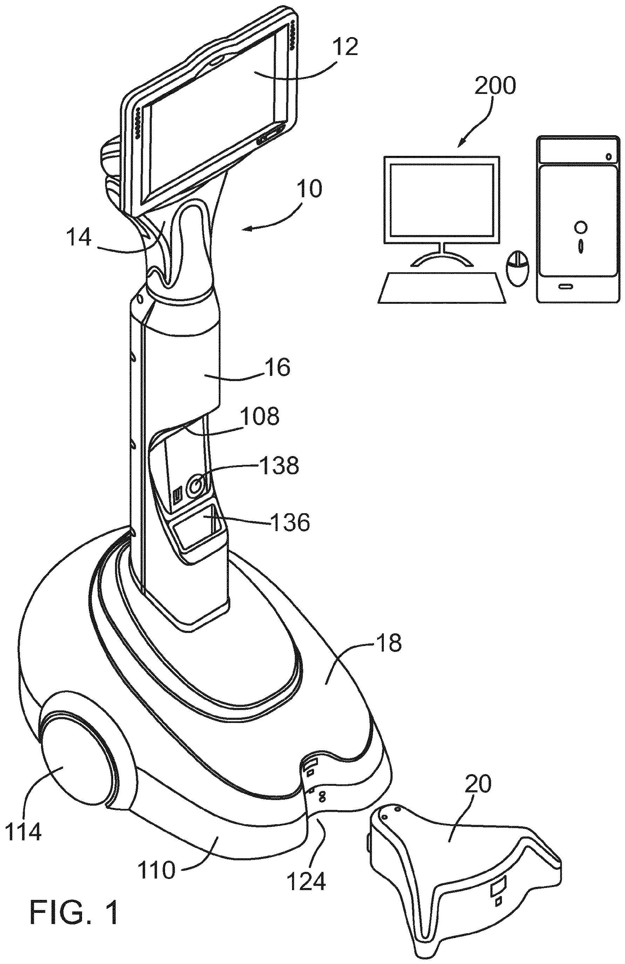

Referring to figure 1 the telepresence robot is shown generally at 10. The telepresence robot 10 includes a head 12, a neck 14, a body 16 and a base or platform 18. The telepresence robot 10 may be charged with a docking station 20.

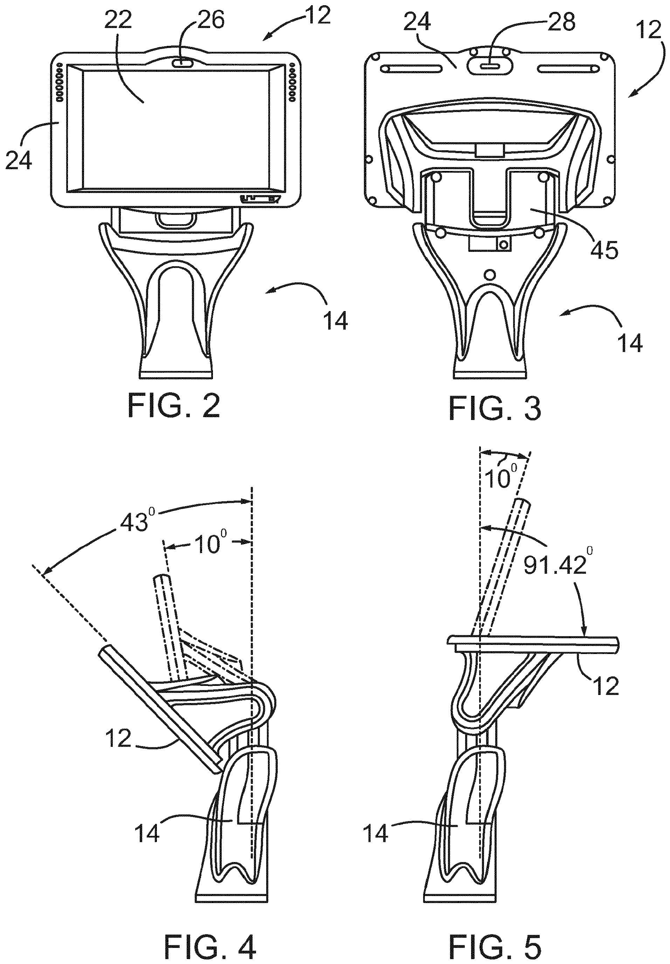

Referring to figures 2 to 5, the head 12 includes a screen or display 22 and a screen housing 24. The screen 22 may be a touch screen and may be an off the shelf tablet or a purpose-built screen. The screen 22 includes a front head camera 26 and a back-head camera 28. In an embodiment, the screen is a 12-inch screen which uses Windows™ 10. However, this may vary based on the needs of the user. The head 12 can tilt to from at least 10 degrees forwardly and preferably to over 40 degrees forwardly from a generally upright position as shown in figure 4. As well the head can tilt to from at least 10 degrees backwardly and preferably to over 90 degrees backwardly from a generally upright position as shown in figure 5. This tilting feature provides the telepresence robot 10 with a wide range of functionality. Specifically, it allows the telepresence robot 10 to be used to serve an inspection function because it could inspect both a floor and a ceiling. It also allows the user to tilt the head to easily focus on a specific speaker if the telepresence robot 10 is used in a conference with multiple speakers. Similarly, if the telepresence robot 10 is used in a hospital or other setting the head can tilt such that it can focus on someone who cannot stand and is in a chair on lying in a bed. As well, the telepresence robot 10 could be used in a store to check inventory and the head can tilt such that it can see items on a top shelf as well as a bottom shelf. Further the telepresence robot 10 may be used in a home and could tilt its head to see children or other people on the floor, in a bed or walking around.

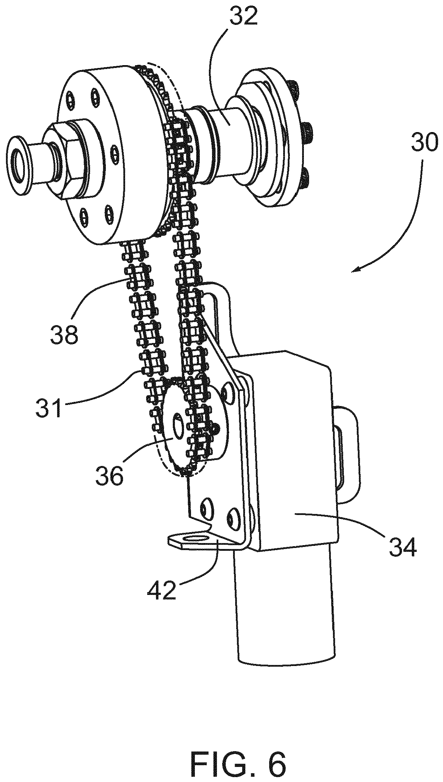

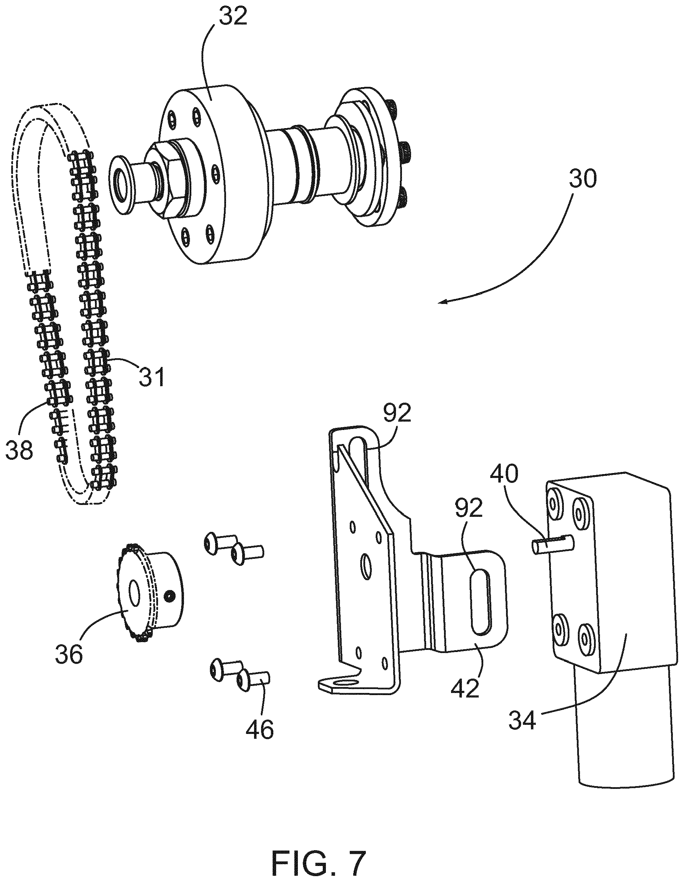

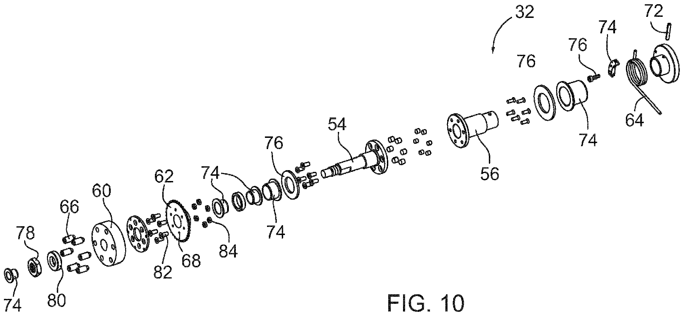

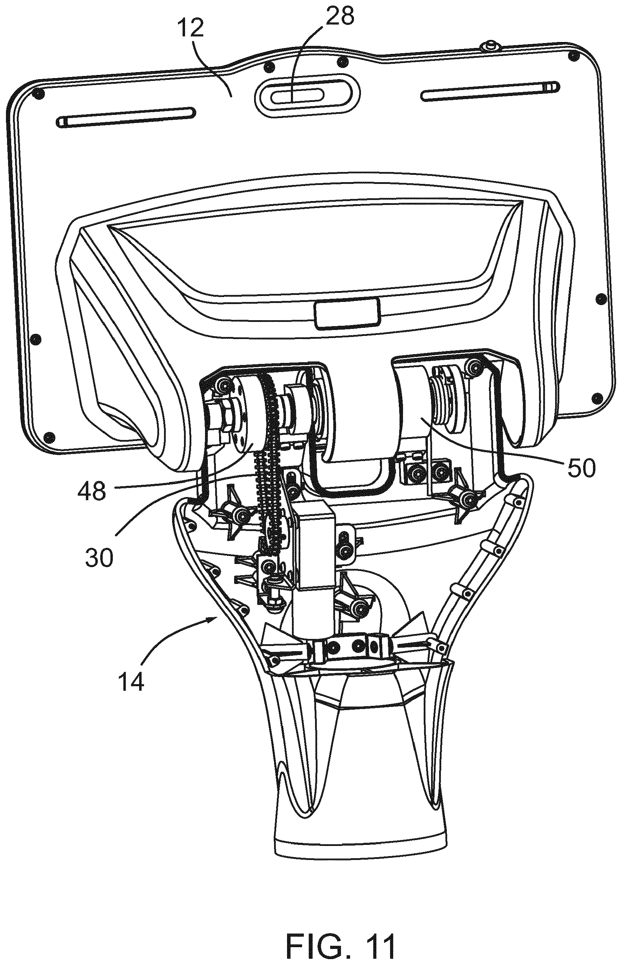

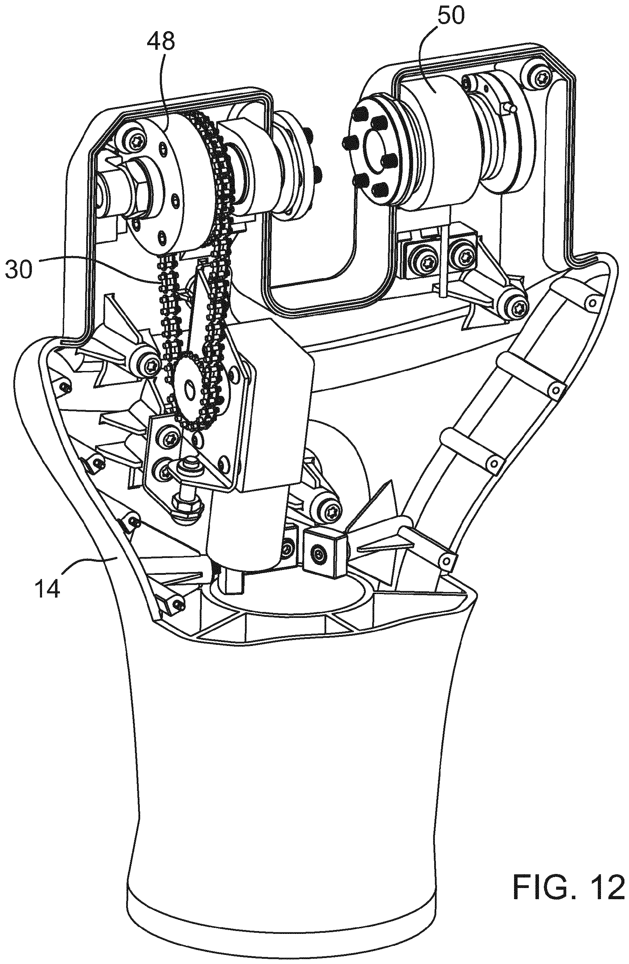

Neck 14 includes a tilt mechanism 30 which is shown in detail in figures 6 to 12. The tilt mechanism is in remote communication with the computing device 200. The tilt mechanism includes a main shaft assembly 32, a chain and sprocket assembly, and a tilt motor 34. The tilt motor 34 is operably connected to the main shaft assembly 32 with a chain and sprocket assembly 31 that includes a motor sprocket 36, a shaft sprocket 58 that is part of the main shaft assembly 32 and a chain 38. The motor sprocket 36 is attached to the shaft 40 of the tilt motor 34. A tilt motor mount 42 is used to attach the tilt motor 34 to the front panel 44 of the neck 14 as best seen in figures 11 and 12. A plurality of screws 46 are used to attach the tilt motor 34 to the tilt motor mount 42. The main shaft assembly 32 is operably connected to the head 12.

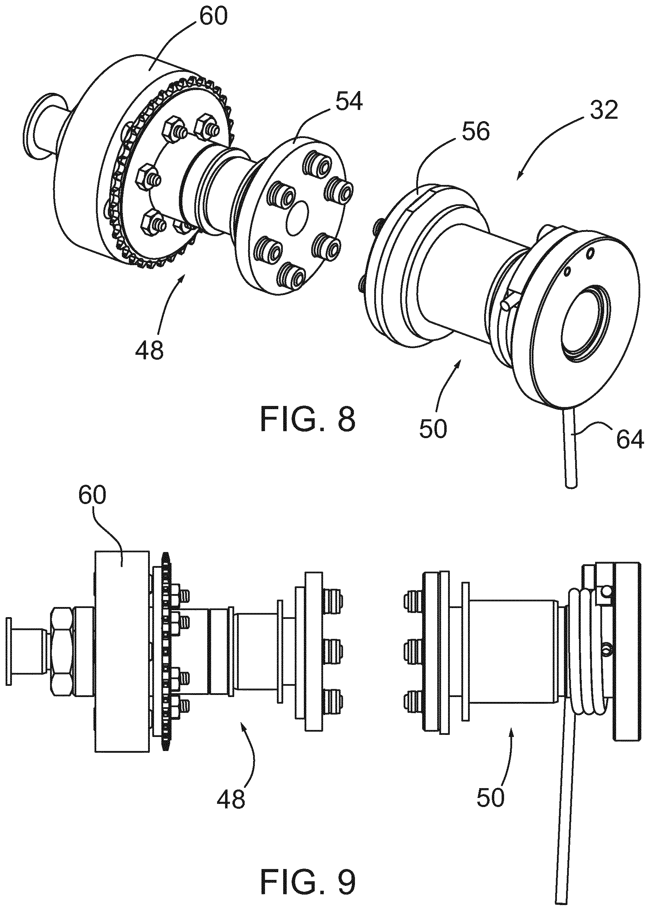

The main shaft assembly 32 is shown in detail in figures 8 to 10. The main shaft assembly 32 includes a clutch side 48 and a main side 50 which are attached on opposing sides of a neck engagement portion 52 of the head 12. The main shaft assembly includes a clutch side main shaft 54, a spring side main shaft 56, a shaft sprocket 58, a clutch 60, a clutch sprocket interface 62 and a torsion spring 64. The clutch 60 includes a plurality of plungers 66 each having a ball end. The plungers 66 engage the plurality of holes 68 in the clutch sprocket interface 62. A spring holder 70 is attached to the spring side main shaft 56 with a pin 72. A spring blocker 74 is attached to the spring holder 70 and a pin 76 holds the spring 64 in place. The main shaft assembly is provided with a plurality of flanged type bushings 75 and a plurality of O-ring type bushings 77. A nut 78 and washer 80 hold the clutch 60 in place. A plurality of screws 82 and nuts 84 attach the clutch sprocket interface 62 to the shaft sprocket 58. The clutch side main shaft 54 and the spring side main shaft 56 are provided with a plurality of thread inserts 86. A plurality of screws 88 are used to connect the main shaft assembly 32 to the neck engagement portion 52 of the head 12. The main shaft assembly 32 is attached to the front panel 44 with brackets 98.

The shaft sprocket 58 of the main shaft assembly 32 is operably connected to the motor 34 with chain 38. The shaft sprocket 58 is operably connected to the clutch side main shaft 54 by the clutch 60. Thus, the clutch 60 is operably connected between the chain and sprocket assembly 31 and the main shaft assembly 32. In the event a force on the head 12 over a predetermined amount, the clutch operably disengages the chain and sprocket assembly 31 from the main shaft assembly 32. More specifically, in the event a force is applied to the head over a predetermined value, the plungers 66 will slip and disengage from the clutch sprocket interface 62. Therefore, in the event that a user or other external force attempts to manually force the head 12 to tilt, the clutch 60 reduces the likelihood of damaging the internal systems. Similarly, should the head 12 begin tilting responsive to a command and encounter an obstacle, a predetermined amount of force will be applied before the clutch 60 disengages the chain and sprocket assembly 31.

The chain and sprocket assembly 31 is used to tilt the head 12. The force exerted by the chain and sprocket assembly 31 will vary depending on the angle of tilt on the head 12. However, typically there the chain and sprocket assembly 31 will exert at least some force on the head 12. The motor is 34 is attached to the front panel 44 of the neck 14 and is thus stationary within the neck. The chain 38 is used to transfer the force from the motor 34 to the head 12. A chain tensioning bracket 90 is attached to the front panel 44 of the neck 14. The tilt motor mount 42 has elongate holes 92 for receiving screws therein. The tilt motor mount 42 is attached to the chain tensioning bracket 90 with a nut 94 and bolt 96 such that the screws attaching the tilt motor mount 42 to the front panel 44 can move in the elongate holes 92 until the chain is tightened and then the tilt motor mount 42 is secured in place. As can be seen in 11 and 12 when the back panel 45 (shown in figure 3) is removed there is easy access to the tilt mechanism 30 and specifically the nut 94 and bolt 96 of the chain tensioning bracket 90 if the chain 38 should loosen over time. The chain sprocket assembly 31 provides for endurance, ease of maintenance and at least some pressure thus providing stability to the head 12.

The spring 64 counterbalances the weight of the head 12 as it moves further from its center of gravity above the pivot point. This provides for smooth motion as well as allows the use of a smaller, more efficient motor 34 to drive the tilt. As the head 12 rotates further forward, the center of gravity follows and moves away from the pivot point. Because of shift in the center of gravity, an additional strain on the tilt motor 34 is applied when attempting to lift the head back up. The spring 64 applies a torsional force in the opposite direction, the torsion spring 64 effectively decreases and may eliminate the strain on the tilt motor 34 caused by gravity. This helps to provide smooth and consistent motion of the head.

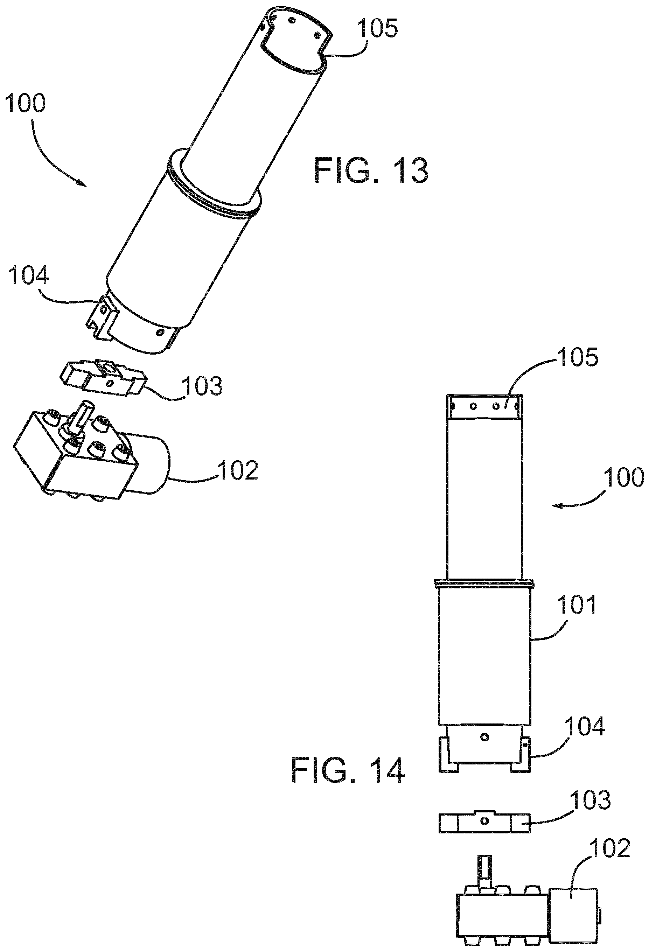

The telepresence robot 10 also includes a pan assembly 100 which is housed in the body 16. The pan assembly 100 is in remote communication with the computing device 200. Referring to figures 13 and 14, the head 12 and neck 14 (not shown) are operably attached to a shaft assembly 101 which is rotatable thereby rotating the head 12 and neck 14. A pan motor 102 is operably attached to the shaft assembly 101. A connector 103 is installed at the interface between the shaft assembly 101 and the pan motor 102 to prevent the separation between these two parts. The shaft assembly 101 includes a shaft adaptor 104 for coupling the connector 103 to the pan motor 102. Preferably the pan assembly 100 can pan or rotate the head 12 from -160 to +160 degrees relative to a neutral position. The shaft assembly 101 includes a neck seat 105 to which the neck 14 is attached.

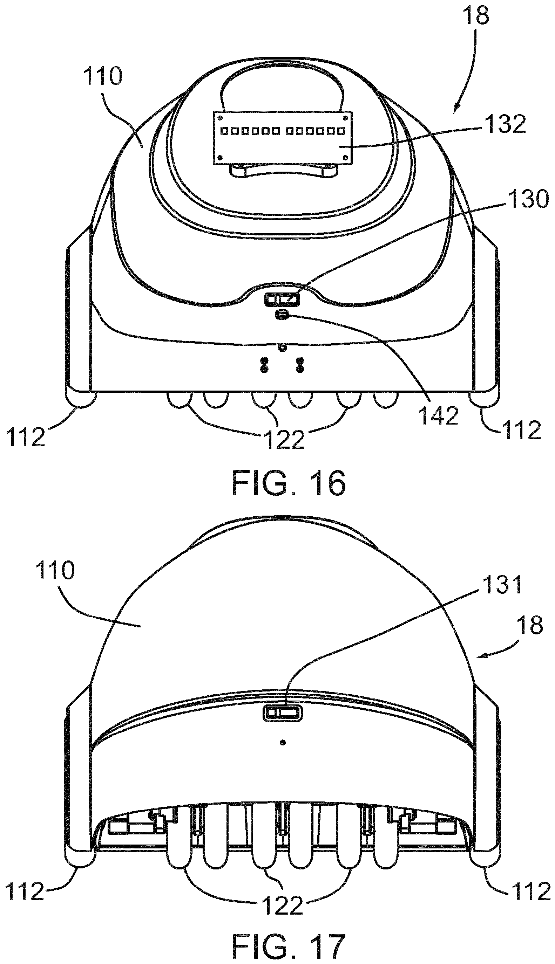

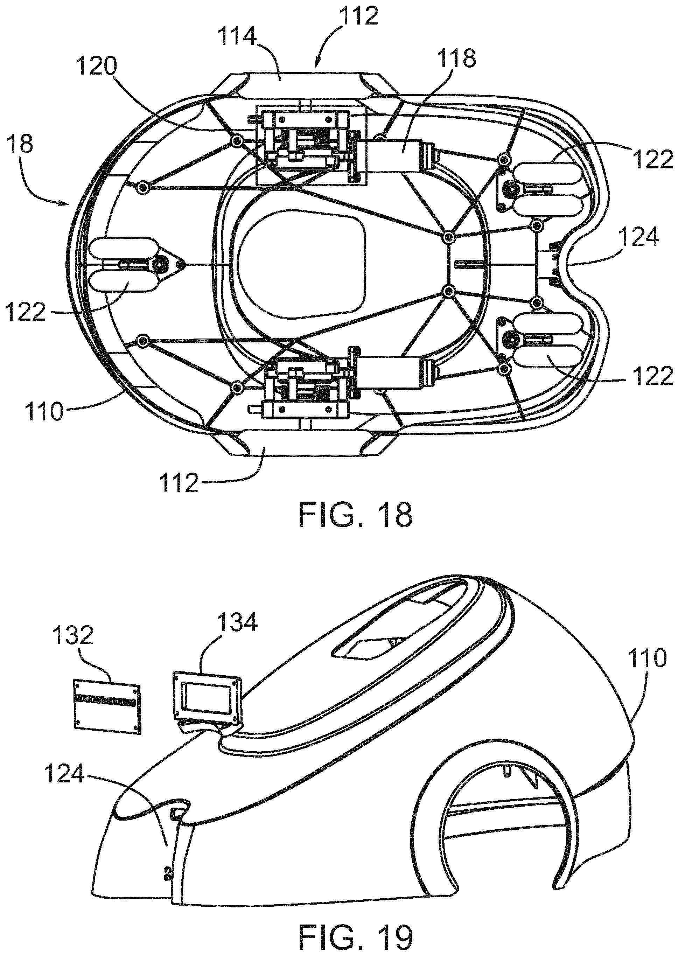

The base 18 has a relatively small footprint with a relatively few parts. In the embodiment shown in figures 16 to 19 the footprint is less than 45 cm in diameter. The base 18 includes a base housing 110 and a pair of drive wheel assemblies 112. Each drive wheel assembly 112 is in remote communication with a computing device 200. Each drive wheel assembly 112 includes a wheel 114 operably connected to a shaft 116 and a motor 118. A connection assembly 120 is between the wheel 114 and the motor 118. The drive wheel assemblies 112 are positioned such that their wheels 114 are spaced apart and are on opposed sides of the base housing 110. The wheels 114 are separately controllable with a pair of wheel drive motors 118 to provide for differential driving. This allows the telepresence robot 10 to pass through doors easily and to have a relatively tight turning radius. The base 18 has a front generally vertical groove 124 for receiving the docking station 20. In addition to the pair of drive wheel assemblies 112 the base 18 also includes wheels 122. In the embodiment shown herein wheels 122 are caster wheels and a pair of caster wheels are positioned at the back of the base 18 and two pair of caster wheels are positioned at the front of the base on opposing sides of the vertical groove 124. It will be appreciated by those skilled in the art that alternate drive systems may be used and that the drive system shown herein is by way of example only. Further, by way of example only the telepresence robot 10 is around 138 cm in height.

In addition to the front head camera 26 and the back-head camera 28, the telepresence robot 10 also has a navigation camera 108 as shown in figure 1. The navigation camera 108 is a fish eye camera pointing generally forwardly towards the floor. The fish eye camera preferably has a 180 degree field of view. The telepresence robot 10 may also be provided with such accessories as a payload pocket 136 and a 12V cigar port 138. It will be appreciated that the payload pocket could carry a variety of objects such as a cell phone, or other objects. Telepresence robot 10 is also provided with a USB port 140. The USB port can act as a charger for a cell phone, tablet or the like. In addition the USB port can be used to download information from a USB key, tablet or the like. A plurality of sensors are positioned on the telepresence robot 10. The plurality of sensors are used for the automatic detection of objects or persons and used to stop the telepresence robot for safety. The telepresence robot 10 includes a collision avoidance system. In the embodiment shown herein, the collision avoidance system includes a plurality of sensors. By way of example only the collision avoidance system includes front 130 and a back 131 IR (infrared) sensors as best seen in figures 16 and 17. Sensors 130 and 131 are infrared sensors and include both an IR receiver and an IR transmitter. Sensors 130 and 131 are used to detect objection. In the embodiment herein a SHARP™ sensor are used for sensors 130 and 131. The collision avoidance system also includes a distance sensor 142. The collision avoidance system is operably connected to the drive wheel assemblies 112. The collision avoidance system is configured such that if the distance to an object is below a predetermined threshold then the drive wheel assemblies will not be permitted to move the telepresence robot 10 to reduce that distance thus providing a collision avoidance system. The telepresence robot 10 will however be allowed to rotate in place or drive backwards.

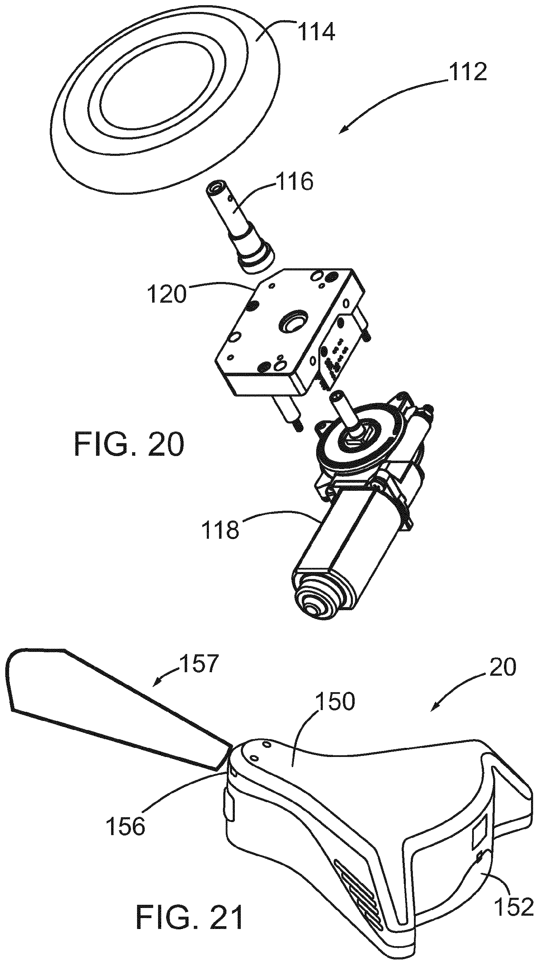

In addition, the base 18 may have an IR receiver 132 attached to the base 18 with a mount 134. The telepresence robot 10 may be charged with a docking station 20 shown in figures 21 to 23. The docking station 20 includes a bottom shell 152 and a top shell 150. In the embodiment shown herein the top shell 150 and bottom shell 152 are held together with a plurality of screws 154. An IR (infrared) transmitter/emitter 156 is used to aid in the docking of the telepresence robot 10 with the docking station 20. The docking station 20 includes an AC outlet. When the docking station 20 is being used to charge the telepresence robot 10 it is plugged into an AC outlet. In order for the telepresence robot 10 to dock the collision avoidance system needs to be disabled since for the telepresence robot 10 will need to get closer than predetermined threshold. Using only these sensors 130 and 131 provides enough information to evade impacts and operate the telepresence robot 10 safely. However, in order to dock with the charging station, the telepresence robot 10 needs to approach and make contact. Since the IR sensors 130 and 131 are incapable of distinguishing between objects, unless there is an override function the collision avoidance system will halt the telepresence robot 10 prior to contact with the docking or charging station 20. The override function allows the collision avoidance system to operate normally except when approaching the docking station 20.

Docking station 20 has two modes: 1) standby mode and 2) docking mode. The docking station 20 has two LED (light emitting diode) indicators including a red LED 158 and a green LED 160. When the docking station 20 is in the standby mode the green LED 160 is on and the red LED 158 is off. In the standby mode the docking station is plugged in but the transmitter/emitter is not activated. In the docking mode the power is on and the IR emitter is on. In addition, the LED lights switch to green LED flashing and red LED flashing status to indicating the telepresence robot is approaching the docking station. Then the red LED switches to solid to indicating the charging is processing. Then the green LED switches to solid to indicate that the charging is completed.

By way of example only, the following chart shows the detailed sequence for charging the telepresence robot 10.

| **Sequence** | **Status** | **IR Read** | **LED Green** | **LED Red** | **Power Switch (Charing Function)** |
|---|---|---|---|---|---|
| 1 | AC Power OFF (AC plug disconnected) | OFF | OFF | OFF | Disabled |
| 2 | AC Power ON (AC plug connected) /Standby mode | OFF | ON | OFF | Disabled |
| 3 | Robot near/approaching mode | ON | FLASH | FLASH | Enabled |
| 4 | Robot Contacted/docking mode | ON | FLASH | ON | Enabled |
| 5 | Robot Full Charged | ON | ON | OFF | Enabled |

The description for the 5 scenarios is shown below:
1. When the docking station is not plugged with AC power, all the LEDs and IR emitter are powered off and the charging function is disabled. We call this scenario "Power off
2. When the docking station is plugged with AC power, but not charging the telepresence robot it is the "stand by" scenario. During this time, the green LED is on while the red LED is off. The IR emitter is off and the charging function is disabled.
3. When the telepresence robot is approaching the docking station, both LEDs are flashing, IR emitter is on and the charging function is enabled.
4. When the telepresence robot is fully contacted with the docking station, the green LED is flashing while the red LED is on. The IR emitter is on and the charging function is enabled.
5. When the telepresence robot is fully charged, the green LED is on and the red LED is off.

Similarly the telepresence robot 10 has two modes: 1) operation mode and 2) docking mode. While the operation mode is engaged, the collision avoidance system on telepresence robot 10 is enabled and it functions to detect obstacles and avoid collisions. While the docking mode is enabled, the collision avoidance system is disabled.

The IR sensor 130 on the telepresence robot 10 toggles on and off a predetermined number of times each second. By way of example, IR sensor 130 toggles off five times each second. The override function activates only if the IR sensor 130 detects a value greater than a predetermined target threshold for a period longer than the 200 milliseconds the telepresence robot 10 own IR sensor 130 is active. This reduces the possibility of a reflection triggering the override.

The IR transmitter 156 can provide a constant IR emission shown at 157 in figure 21 and is located on the front of the docking station 20. The IR transmitter is in active when the docking station is in standby mode. IR transmitter 156 is activated when the IR receiver 156 on the docking station 20 detects the IR emissions from the IR transmitter 142 emitter on the telepresence robot 10.

In use, when the telepresence robot 10 has low battery level, the user who is controlling it will get the notice and will remotely drive the telepresence robot 10 near to the front of the docking station 20. By way of example this may be about 1.5m from the front of the docking station 20. The telepresence robot 10 has an IR receiver 144 at the front of the base 18, and the docking station has an IR transmitter 156. Once the telepresence robot 10 is located around the charging station area, the IR transmitter 156 will emit signal and IR receiver 144 will receive the signal. Then docking station 20 switches from the standby mode to the docking mode and the telepresence robot 10 switches from the operation mode to the docking mode. Then, the telepresence robot 10 will automatically drive to the docking station 20 and dock itself to the docking station for recharging.

Alternatively the telepresence robot 10 could be manually directly connected to an AC outlet through 12V cigar port 138.

The telepresence robot 10 is battery powered. By way of example it is powered by a set of batteries connected in parallel. In the example herein the set of batteries is three 12 Volt, 12 Amp rechargeable batteries. In the example herein, the screen 22 has a built in battery and is operably connected to a central USB hub. The USB hub is connected to the USB port 140. The USB port 140 is connected to the batteries.

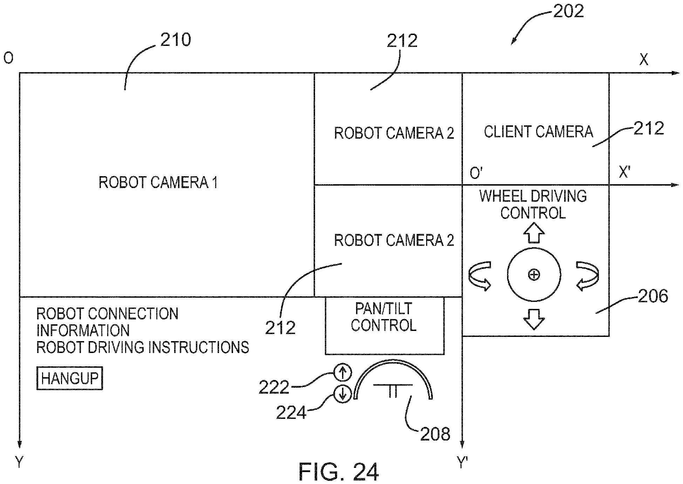

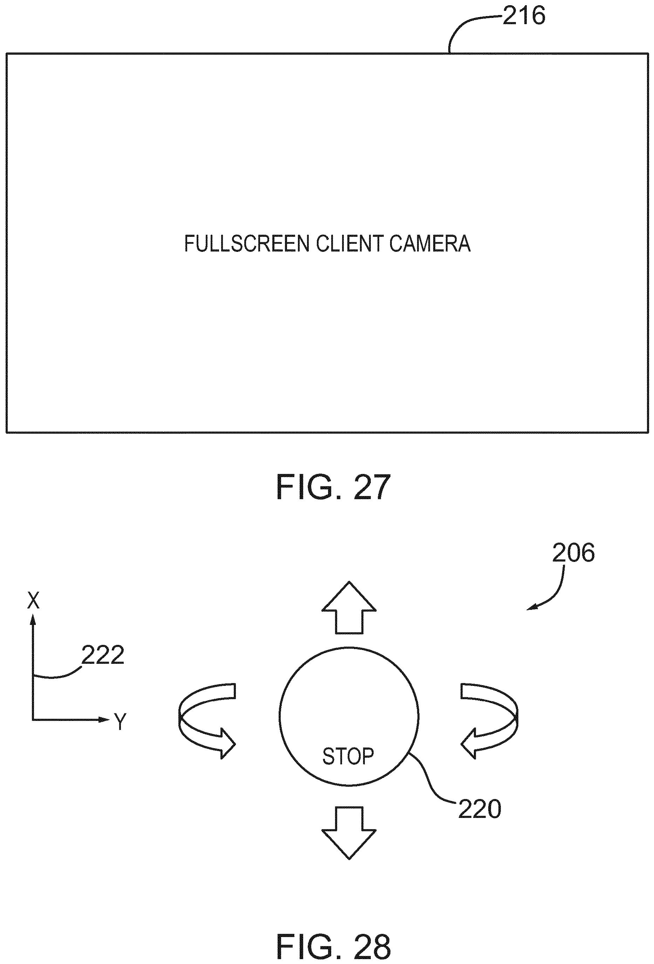

The telepresence robot 10 may be controlled remotely with a computer or other computing device 200. By way of example the telepresence robot 10 could also be controlled by a tablet. The computing device 200 is in communication with the screen 22 of the head 12 of the telepresence robot 10. The image user interface or remote operator user interface 202 on the user's computing device 200 may include a plurality of images 204 from cameras on the telepresence robot 10, an image a user camera operably connected to the user's computing device 200, a mobile control interface 206 and a pan and tilt control interface 208. The plurality of images may include a larger image 210 and a plurality of smaller images 212 as shown in figures 24 to 26. The user may swap the source of the images for the large image 210 and the smaller images 212. The user would pick from the front head camera 26, back-head camera 28, navigation camera 108 and user camera 214. The Multi-view function allows the user to present the camera information in the best possible location on the user interface monitor. The user may interchange the display of the cameras. The default state is to have the front head camera 26 given the larger image 210. However, should the user wish to begin navigating the environment around the telepresence robot 10, they can move the image from the navigation camera 108 into the larger image 210 on the image user interface or remote operator user interface and swap it with image from the front head camera 26. When the driving is completed, the user can reverse the camera views. Multi-view function allows the user to interchange the display of the cameras on their monitor in order to receive the information in form of their choosing. Without this function, the user may gather information less efficiently, less user-friendly and in an inflexible manner. It will be appreciated by those skilled in the art that the multi-view function may be done using a mouse or if the user has a touch screen the view could also be switched using a drag and drop function. Similarly the screen 22 on the head 12 may display a single image of the user camera 214 as shown in figure 27 at 216. Alternatively, screen may include additional images from the other cameras on the telepresence robot 10.

By way of example only, these screen swapping operations have been implemented to swap between cameras. The user can drag and drop one video stream on the webpage, and the JavaScript in this webpage calls XMLHttpRequest to communicate with the web server; then the web server sends swap command to the virtual camera with UDP (User Datagram Protocol), and finally the virtual camera swaps the video streams. The techniques used in this case include JavaScript, AJAX, WinSock, Overlapped IO and Windows event objects. The algorithm has been carefully designed to ensure smooth swapping with near zero overhead. As used herein overhead means any combination of excess or indirect computation time, memory, bandwidth, or other resources that are required to attain a particular goal.

The remote control system is an innovative graphical interface providing the user with control of the telepresence robot 10 in a non-touch screen based working environment. Following is a detailed description of the remote touching control system and the operational graphical interface for use therewith.

Referring to figure 28 the mobile control interface is shown generally at 206. The mobile control interface 206 is remotely operably connected to the drive wheel assemblies 112. It will be appreciated by those skilled in the art that the mobile control interface described herein is by way of example only and that other mobile control interfaces would also work. To drive forward, the user uses the mouse to click on the upper portion of the image. To turn, the user clicks on the side of the image that they would like the telepresence robot 10 to turn to. For example, to make the telepresence robot 10 travel forward while turning left in a sweeping arc, the user clicks on the upper left portion of the image. The results are forward motion with a bias towards the left.

The transition from a mouse click to commands given to each wheel is a multi-step process. The first step is to record the location of the user's mouse click. This value is the x, y coordinate on the screen where the click occurred, relative to the top left corner of the screen. To make this position useful, it needs to be relative to where the image is. To accomplish this, the coordinates of the image being display on the screen are subtracted from the location of the mouse click. This results in a Cartesian coordinate relative to the image. The Cartesian coordinates are checked to make sure they are within the bounds of an acceptable command. That is to say they must be within pre-defined limits. As shown in figure 24, the control or remote user screen is shown. Graphically speaking, the top-left corner of the screen is defined as the original point - O (0,0) with horizontal direction as x-axis and vertical direction as y-axis. Within the control system herein this coordinate system is referred to as the main Cartesian system. The mobile control interface 206 shown herein in the right-bottom corner window also has its own Cartesian coordinate system with its origin O' at the left-top corner of its own window. The driving interface has x'-axis at horizontal direction and y'-axis at vertical direction. Within the control system herein this coordinate system is referred to as the control Cartesian system.

The mouse cursor is "placed" on the screen and the cursor has a coordinate in the main Cartesian system and another coordinate in the control Cartesian system. There is a relative value between these two coordinates and this value will be sent to the back-stage for calculation to control the movement of the telepresence robot.

By way of example, if the mouse cursor is inside the control Cartesian system, the mouse can control the telepresence robot's movement; however, if the mouse cursor move outside the "boundary" of the control window, the mouse cannot control the telepresence robot's movement. The mouse cursor's coordinate is always checked against to the origin-O of the entire tablet to ensure the cursor is within the range of control window.

The next step is to check if the user's click was within the circle located in the center of the image. This is accomplished by using the distance value from the polar form of the coordinate and comparing it to the radius of the circle. If the click's distance value is greater than the radius of the circle, the click was clearly outside the circle.

By way of example, in use if the user clicks was within the circle or stop zone 220, the telepresence robot 10 stops. If the click was outside the circle, the telepresence robot 10 will move. To give the proper speed to each wheel, the Cartesian coordinates relative to the center of the image or stop zone 220 are used and wheel speeds are proportionally assigned. Thus, if the mouse cursor is closer to the center of the circle or stop zone 220, a lower speed is applied to the telepresence robot movement. If the mouse cursor is further away from the center of the stop zone 220, a higher speed is applied to the telepresence robot 10.

Alternatively the user may use the arrow keys located on a keyboard to control direction of the telepresence robot 10. This is particularly useful when fine control is not needed. The up key moves the telepresence robot forward, the down key backwards, and the left keys turns the telepresence robot 10 left and the right key turns the telepresence robot 10 right.

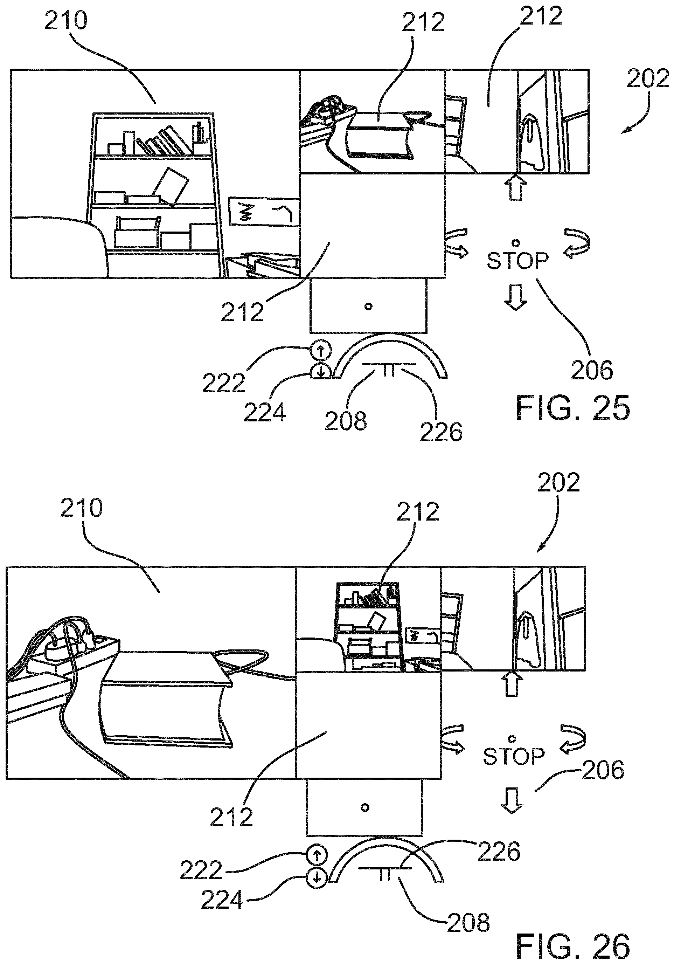

The operation of the telepresence robot 10 is via remote control and may be via the Internet. The operation could include a remote log-in. The user control may include dual-direction media communication via the Internet and media recording. The pan and tilt control interface 208 shown in figures 25 and 26 includes up and down icons 222 and 224 respectively. The up and down icons 222 and 224 are remotely operably connected to the tilt mechanism 30. The user controls the up and down movement of the head by clicking on these icons. The "π" shape icon 226 allows users to pan the head by mouse-dragging the logo to left and right. The "π" shape icon 226 is remotely operably connected to the pan assembly 100.

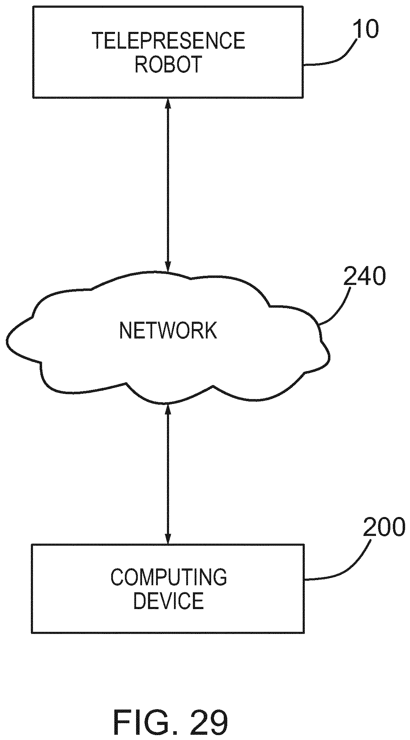

Referring to figure 29, the telepresence robot 10 is controlled by a computing device 200 via a network 240. The network 240 may include a local area network (LAN), a wide area network (WAN) (e.g., the Internet), and/or other interconnected data paths across which multiple devices may communicate. In some implementations, the network 240 may be a peer-to-peer network. The network 240 may also be coupled to or includes portions of a telecommunications network for sending data in a variety of different communication protocols. In some implementations, the network 240 includes Bluetooth communication networks or a cellular communications network for sending and receiving data including via short messaging service (SMS), multimedia messaging service (MMS), hypertext transfer protocol (HTTP), direct data connection, WAP, email, etc.

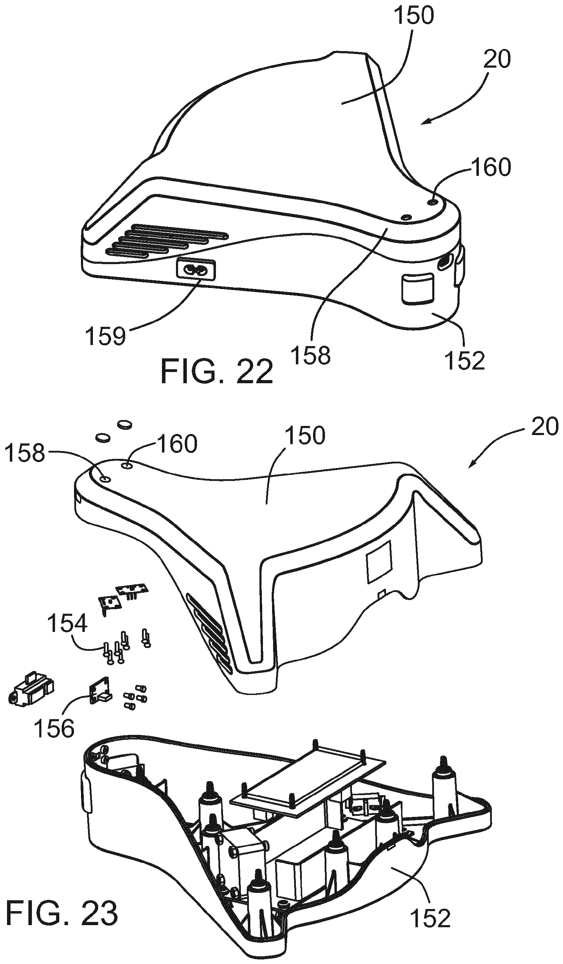

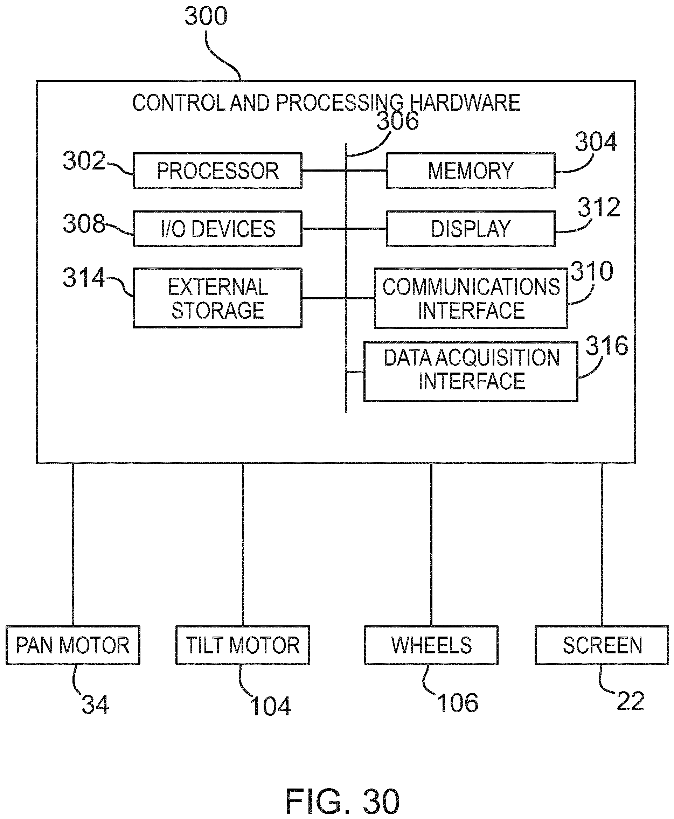

The telepresence robot 10 includes control and processing hardware 300. Figure 30 shows an example embodiment of the control and processing hardware 300 which is operably connected to the tilt motor 34, the pan motor 102 and motors (not shown) for the wheels 114 and the screen 22. As shown in the example embodiment illustrated in figure 22, control and processing hardware 300 may include a processor 302, a memory 304, a system bus 306, one or more input/output devices 308, and a plurality of optional additional devices such as communications interface 310, display 312, external storage 314, and data acquisition interface 316.

It is to be understood that the example system shown in figure 30 is not intended to be limited to the components that may be employed in a given implementation. For example, the system may include one or more additional processors. Furthermore, one or more components of control and processing hardware 300 may be provided as an external component that is interfaced to a processing device. For example, as shown in the figure, display 312 may be included as a component of control and processing hardware 300 (as shown within the box), or may be provided as one or more external devices such as screen 22.

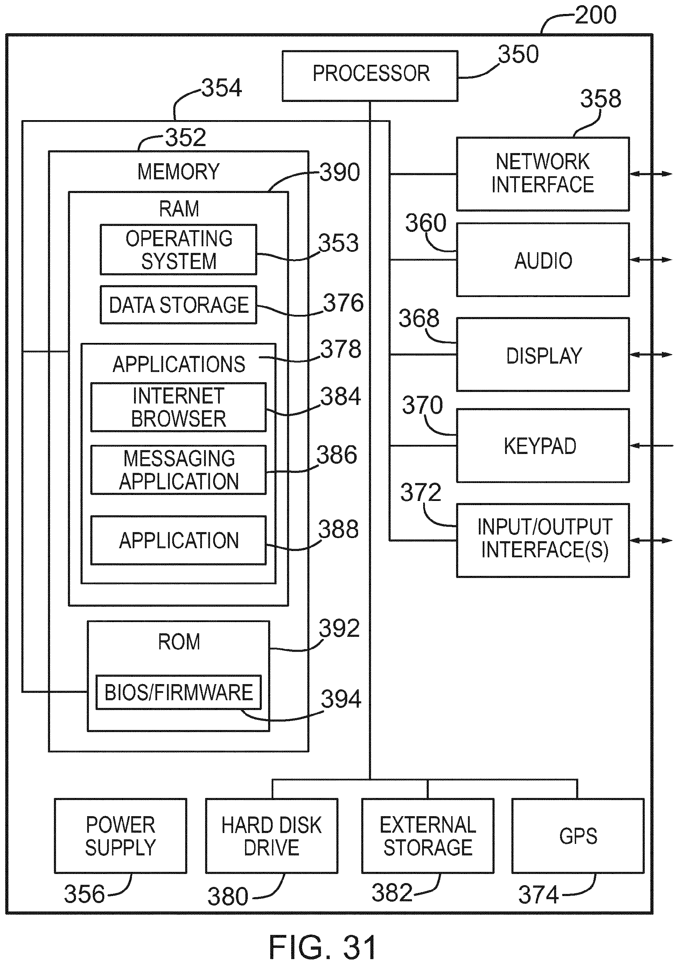

The computing device 200 may take on a variety of forms. Figure 31 illustrates an example embodiment of the computer hardware associated with computing device 200. Computing device 200 includes one or more processors 350 in communication with a mass memory 352 via a bus 354. Computing device 200 also includes a power supply 356, one or more network interfaces 358, an audio interface 360, a display 368, a keypad 370, an input/output interface 372, and an optional global positioning systems (GPS) receiver 374. Power supply 356 provides power to computing device 200. A rechargeable or non-rechargeable battery may be used to provide power. The power may also be provided by an external power source, such as an AC adapter or a powered docking cradle that supplements and/or recharges a battery. Mass memory 352 includes a RAM 390, a ROM 392, and other storage means. Mass memory 352 includes the operating system 353 and one or more data storage 376. The operating system 353 controls the operation of computing device 200. It will be appreciated that this component may include a general purpose operating system such as a version of Windows™, Mac OS™, UNIX, or LINUX™, or a specialized communication operating system such as iOS™, Android™, Windows Mobile™, or the Symbian® operating system, or an embedded operating system such as Windows CE™. The operating system may include, or interface with a Java virtual machine module that enables control of hardware components and/or operating system operations via Java application programs. RAM 390 stores a basic input/output system ("BIOS") or firmware 394 for controlling low-level operation of computing device 200.

The data storage 376 can be utilized by computing device 200 to store, among other things, applications 378 and/or other data. For example, data storage 376 may also be employed to store information that describes various capabilities of computing device 200. The information may then be provided to another device based on any of a variety of events, including being sent as part of a header during a communication, sent upon request, or the like. Moreover, data storage 376 may also be employed to store personal information including but not limited to address lists, contact lists, personal preferences, or the like. In one embodiment, data storage 376 may be configured to store information, including, but not limited to user account information, vendor information, social network information, or the like. At least a portion of the information may also be stored on a disk drive or other storage medium within computing device 200, such as hard disk drive 380, external storage device 382, or the like. In one embodiment, a portion of the information may also be located remote to computing device 200 which controls the telepresence robot 10. The applications 378 may include an internet browser 384, messaging application 386 or other specific applications 388. Internet browser 384 may be configured to receive and to send web pages, forms, web-based messages, and the like. Internet browser 384 may, for example, receive and display (and/or play) graphics, text, multimedia, audio data, and the like, employing virtually any web based language, including, but not limited to Standard Generalized Markup Language (SMGL), such as HyperText Markup Language (HTML), a wireless application protocol (WAP), a Handheld Device Markup Language (HDML), such as Wireless Markup Language (WML), WMLScript, JavaScript, and the like. Messaging application 386 may be configured to initiate and manage a messaging session using any of a variety of messaging communications including, but not limited to email, Short Message Service (SMS), Instant Message (IM), Multimedia Message Service (MMS), internet relay chat (IRC), mIRC, and the like. For example, in one embodiment, messaging application 386 may be configured as an IM application, such as AOL Instant Messenger, Yahoo! Messenger, .NET Messenger Server, ICQ, or the like. In one embodiment messenger 272 may be configured to include a mail user agent (MUA) such as Elm, Pine, MH, Outlook, Eudora, Mac Mail, Mozilla Thunderbird, or the like. In another embodiment, messaging application 386 may be an application that is configured to integrate and employ a variety of messaging protocols. In one embodiment, messaging application 386 may employ various message boxes to manage and/or store messages.

Generally speaking, the systems described herein are directed to telepresence robots. Various embodiments and aspects of the disclosure are described with reference to detailed discussion. The description and drawings are illustrative of the disclosure and are not to be construed as limiting the disclosure. Numerous specific details are described to provide a thorough understanding of various embodiments of the present disclosure. However, in certain instances, well-known or conventional details are not described in order to provide a concise discussion of embodiments of the present disclosure.

As used herein, the terms, "comprises" and "comprising" are to be construed as being inclusive and open ended, and not exclusive. Specifically, when used in the specification and claims, the terms, "comprises" and "comprising" and variations thereof mean the specified features, steps or components are included. These terms are not to be interpreted to exclude the presence of other features, steps or components.

As used herein, the term "by way of example" means serving as an example, instance, or illustration and should not be construed as preferred or advantageous over other configurations disclosed herein.

As used herein the "operably connected" or "operably attached" means that the two elements are connected or attached either directly or indirectly. Accordingly the items need not be directly connected or attached but may have other items connected or attached therebetween.

## Claims

1. A telepresence robot for use in association with a remote computing device comprising:
a base having a drive system in communication with the remote computing device;
a body operably attached to the base;
a neck operably attached to the body;
a head operably attached to the neck, the head having a screen, the screen being in communication with the remote computing device; and
a tilt mechanism connecting the head to the neck, the tilt mechanism includes a chain and sprocket assembly whereby the head tilts at least 10 degrees forwardly from a generally upright position and at least 10 degrees backwardly form the generally upright position.

2. The telepresence robot as claimed in claim 1 wherein the tilt mechanism can tilt the head at least 40 degrees forwardly from the generally upright position and at least 90 degrees backwardly from the generally upright position.

3. The telepresence robot as claimed in claim 1 or 2 wherein the chain and sprocket assembly of the tilt mechanism includes a main shaft assembly and a spring operably connected to the main shaft assembly whereby the spring counterbalances the head.

4. The telepresence robot as claimed in claim 3 wherein the tilt mechanism further includes a clutch operably attached to the chain and sprocket assembly and the main shaft assembly whereby responsive to a force on the head over a predetermined value the clutch operably disengages the chain and sprocket assembly from the main shaft assembly.

5. The telepresence robot as claimed in any one of claims 1 to 4 further including a pan assembly operably connected to the head.

6. The telepresence robot as claimed in claim 5 wherein the pan assembly rotates the head from -160 degrees to +160 degrees relative to a neutral position.

7. The telepresence robot as claimed in any one of claims 1 to 6 further including a front head camera.

8. The telepresence robot as claimed in any one of claims 1 to 7 further including a navigation camera.

9. The telepresence robot as claimed in claim 8 wherein the navigation camera is a fish eye camera pointing generally forwardly.

10. The telepresence robot as claimed in any one of claims 1 to 9 further including a back-head camera.

11. The telepresence robot as claimed in any one of claims 1 to 10 wherein the remote computing device is a computer having an image user interface.

12. The telepresence robot as claimed in claim 11 wherein the image user interface displays a plurality of images.

13. The telepresence robot as claimed in claim 12 wherein the plurality of images includes images from the front head camera, the back-head camera and the navigation camera.

14. The telepresence robot as claimed in claim 12 or 13 wherein the plurality of images further includes an image from a camera operably attached to the remote computing device.

15. The telepresence robot as claimed in any one of claims 12 to 14 wherein one of the plurality of images is a larger image.

16. The telepresence robot as claimed in claim 15 wherein the larger image may be swapped between the images from the front head camera, the back-head camera, the navigation camera and the remote computing device camera.

17. The telepresence robot as claimed in any one of claims 11 to 16 wherein the image user interface further includes a drive interface.

18. The telepresence robot as claimed in claim 17 wherein the drive interface is controlled by clicking on predetermined portions on the drive interface.

19. The telepresence robot as claimed in claim 17 or 18 wherein remote computing device further includes a keyboard having arrow keys and wherein the drive interface is controlled by using the arrow keys.

20. The telepresence robot as claimed in any one of claims 11 to 17 wherein the image user interface further includes a pan and tilt control interface.

21. The telepresence robot as claimed in claim 20 wherein the pan and tilt control interface is controlled by clicking on predetermined portions of the pan and tilt image.

22. The telepresence robot as claimed in claim 7 wherein the remote computing device is a computer having an image user interface which includes a single image from the front head camera.

23. The telepresence robot as claimed in any one of claims 1 to 22 is operably connectable to a docking station.

24. The telepresence robot as claimed in claim 23 includes rechargeable batteries and wherein when the telepresence robot is operably connected to the docking station the rechargeable batteries are recharged.
